# EUROPEAN PATENT SPECIFICATION

(11) **EP 3 059 649 B1**
(45) Date of publication and mention of the grant of the patent: **29.05.2019**
(21) Application number: 16154797.1
(22) Date of filing: 09.02.2016
(51) Int. Cl.: C03B 33/037

(54) **A METHOD FOR POSITIONING A GLASS SHEET ON A WORKING PLANE OF A GLASS SHEET WORKING MACHINE**
VERFAHREN ZUR POSITIONIERUNG EINER GLASSCHEIBER AUF DIE BEARBEITUNGSOBERFLÀCHE EINER GLASSCHEIBEBEARBEITUNGSMASCHINE
MÉTHODE DE POSITIONNEMENT D'UNE FEUILLE DE VERRE SUR UNE SURFACE DE TRAVAIL D'UNE MACHINE DE TRAITEMENT DE FEUILLE DE VERRE

(30) Priority: 17.02.2015 IT TO20150107
(43) Date of publication of application: 24.08.2016
(73) Proprietor: Biesse S.p.A., 61122 Chiusa di Ginestreto (Pesaro Urbino) (IT)
(72) Inventor: AIMAR, Giacomo, I-61122 Chiusa di Ginestreto (Pesaro Urbino) (IT); SIDERI, Paolo, I-61122 Chiusa di Ginestreto (Pesaro Urbino) (IT)
(74) Representative: De Bonis, Paolo

(56) References cited:
- EP-A1- 2 722 297
- US-A1- 2013 276 280

## Description

### Field of the invention

The present invention relates to a method for positioning a glass sheet on a working plane of a glass sheet working machine. Such machines include, for example, glass sheet cutting machines such as those known, for example, from documents ES 2 265 244 and EP 2 113 492 as well as from documents EP 2 177 482 B1, EP 2 722 297 A1 and EP 2 583 951 in the name of the same Applicant, and also machines for peripheral machining of the sheets. Within the framework of the present description some of the main features of said machines will anyway be recalled for a better understanding of the invention.

Among the various applications wherein the method finds use there is in particular the positioning of a glass sheet in preparation to a subsequent cutting operation, and even more particularly a so called "diagonal" cutting operation. As known to the skilled person, by the term "diagonal cut" it is meant to indicate generally a kind of cut that occurs along a rectilinear trajectory that is not parallel to any of the sides of the starting glass sheet, be it a whole glass sheet, a transverse fraction thereof (commonly indicated as "transverse") or a fraction of the same transverse indicated as "primitive" or finished workpiece.

### Prior art and general technical problem

The cut of a glass sheet, be it float glass, laminated glass or else low emission glass (low-e)-just to mention some examples- is typically made by transversally dividing a "blank" sheet in plural portions called "transverses". The modalities by which the cut is made vary as a function of the type of glass. However, the typical dimensions of the transverses (that have a maximum dimension which is nothing short of 6000 mm) are such that they turn out to be markedly oversized with respect to the demands of the market, thus necessitating a partitioning into portions having a yet smaller dimension by means of a cut in a direction orthogonal to the maximum dimension.

Not only that: in order to address specific needs, such as for example certain geometries requested by the clients (think for example to lining elements for facades for construction industry) it is from time to time necessary to partition the transverses/primitives according to diagonal cutting lines.

At present, a known solution for performing diagonal cuts consists in the manual marking of endpoints of the desired cutting line on the glass sheet, and subsequent alignment and the manual control of the two points marked with a laser light fan that marks the position of the cutting line of the machine. Alternatively, it is also known a completely automated solution: automatic control with automated handling unit.

This brings a series of technical problems and drawbacks, particular:
- the handling unit that is to perform the automatic rotation operations becomes overly bulky and complex, having the latter to manage the rotation with whatever magnitude (thus not only 90° rotations) of transverses of disparate dimensions and weights, furthermore preventing -at the same time- possible outings of the transverse from the working surface of the machine (which will result in a danger for the safety of the operators nearby);
- the provision of the markings in correspondence of the endpoints of the cutting line, being it completely manual, is subject to positioning errors with a relative weight which is very high if the typical magnitudes of the positioning errors the machines is subject to are taken into account;
- nevertheless, collimation of the markings on the glass sheet with a laser light fan -already per se not free of difficulties and positioning errors- is a solution that can be implemented successfully essentially on the sole open-structure machines (see for example the machine known from EP 2 177 482 in the name of the same Applicant) wherein a side of the machine (typically downstream of the cutting line, wherein the term "downstream" is to be meant with reference to the direction of advancement) is free of superstructures and leaves completely exposed the area of the cutting line.

On symmetrical machines with superstructures upstream and downstream of the cutting line, collimation of the laser light fan with the markings turns out to be overly difficult, if not unviable at all.

Owing to the difficulties above, the partitioning of the transverses/primitives by means of diagonal cut is nowadays essentially relegated to the end of the normal cutting operations of the transverses (and possible subsequent partitioning with orthogonal cut), if at the end of the working day in the glass cutting facility at all, that is in a moment in which all the material has been processed and the constraints on the performance time of the operations are less stringent. This implies to sideline, for a time that ranges from a few minutes to full hours, the transverses/primitives standing by for diagonal cut. The problem of this sidelining is less marked when transverses having small dimensions are processed, but becomes highly relevant when the stock is made of transverses/primitives having remarkable dimensions and/or thicknesses, in so far as, in the first place, a handling thereof from the standby area has to be envisaged, with a subsequent investment in terms of time and facilities. Furthermore, whatever the type of transverse/primitive that is standing by, the stay of semi-processed material for a long time proportionally increases the risk of accidental damage thereof.

More in general, it should be observed that the case of diagonal cut is only one of the possible examples of a glass working operation wherein the positioning of the glass sheet on the working plane of the machine is crucial to the successful outcome of the operation itself. In particular, plural other operations wherein the positioning of the glass sheet on the working plane of the machine constitutes a step susceptible of requiring a major investment in terms of time and susceptible of dictating a higher structural complexity of the machine. Other examples of such operations include the peripheral processing operations of the edges of the glass sheet or the operations of drilling of through holes in the glass sheet, which require machines and positioning system expressly designed (and generally very complex) to reach the desired result.

### Object of the invention

The invention has the object of solving the aforementioned technical drawbacks. In particular, the object of the invention is that of providing a method for positioning of a glass sheet on a working plane of a glass sheet working machine that allows to reach a high positioning precision, to simplify the handling of the glass sheet and the handling unit itself, and that is susceptible of requiring reduced times to complete the positioning itself prior to moving on with the processing.

### Summary of the invention

The object of the invention is achieved by a method for positioning a glass sheet on a working plane of a glass sheet working machine having the features forming the subject of one or more of the appended claims, which form an integral part of the technical disclosure herein provided in relation to the invention.

In particular, the object of the invention is achieved by a method according to claim 1.

### Brief description of the figures

The invention will now be described with reference to the attached figures, provided purely by way of non limiting example, and wherein:
- figures 1 to 6 show as an example a glass sheet working machine whereon the method according to the invention can be implemented,
- figures 6A-6F schematically show a sequence of operating steps of the machine of figures 1 to 6,
- figures 7A-7D schematically show an operating sequence corresponding to the method according to the invention,
- figures 8A-8C again show an operating sequence corresponding to the method according to the invention, but they relate to a different starting condition,
- figure 9 shows a perspective view of an engagement member for a glass sheet which can be used within the framework of the method according to the invention, and
- figure 10 is a sectional view according to the trace X-X of figure 9.

### Detailed description

In the following description various specific details are shown with the aim of providing a thorough understanding of embodiments. The embodiments may be practiced without one or more the specific details, or with other metals, components, materials etc. In other cases, structures, constructional details, materials or known operations are not shown or described in detail, in so far as they may be provided in whatever known manner and also in so far as they do not fall, considered per se, within the present invention.

Additionally, the description of the method according to the invention will be developed mainly with reference to the case wherein the glass sheet working machine is a glass sheet cutting machine, particularly a machine for cutting laminated glass sheets.

The man skilled in the art will however appreciate that the method according to the invention may be implemented on whatever cutting machine (thereby including also the machines for cutting float glass), as well as on any machine for processing glass sheets (for example machine for peripheral working of glass sheets).

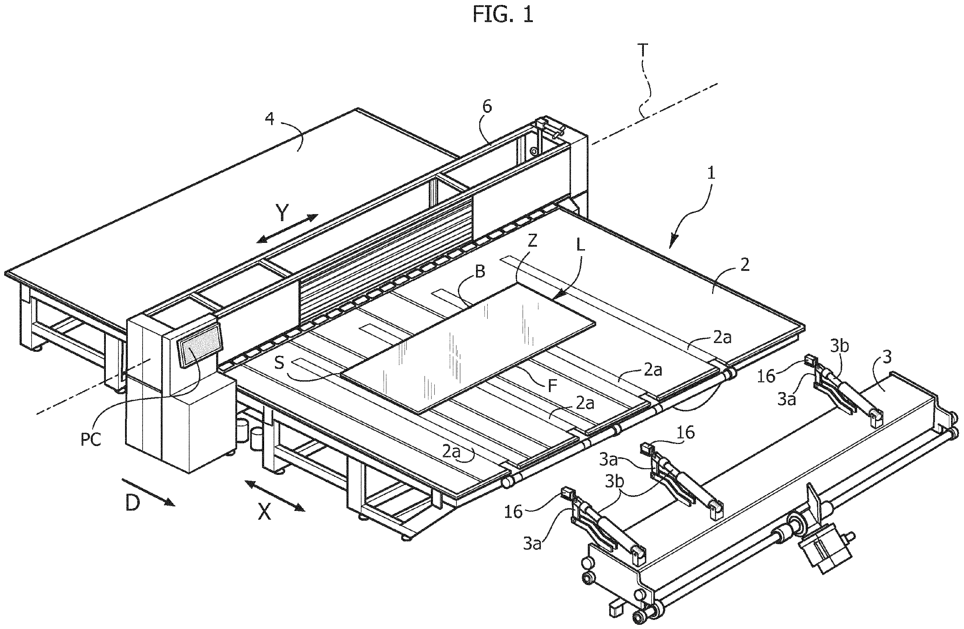

All the above said, the automatic cut of a laminated glass sheets is provided in general by means of machines of the type shown in figure 1. Reference number 1 designates as a whole the machine. Such machines comprise a bench defining a supporting surface 2 for glass sheets L, a feeding plane 4 of the sheets L and a fixed bridge 6. The feeding of the glass sheets occurs along a direction X that is longitudinally oriented with respect to the machine.

The cutting of the sheet L of laminated glass is provided via a first step of incision of the upper and lower sheets, a step of breaking into two separate portions of each of the upper and lower glass sheets, a softening step of the plastic sheet and a detaching or tearing step of the plastic sheet to obtain a total separation of the two portions of the laminated glass sheet.

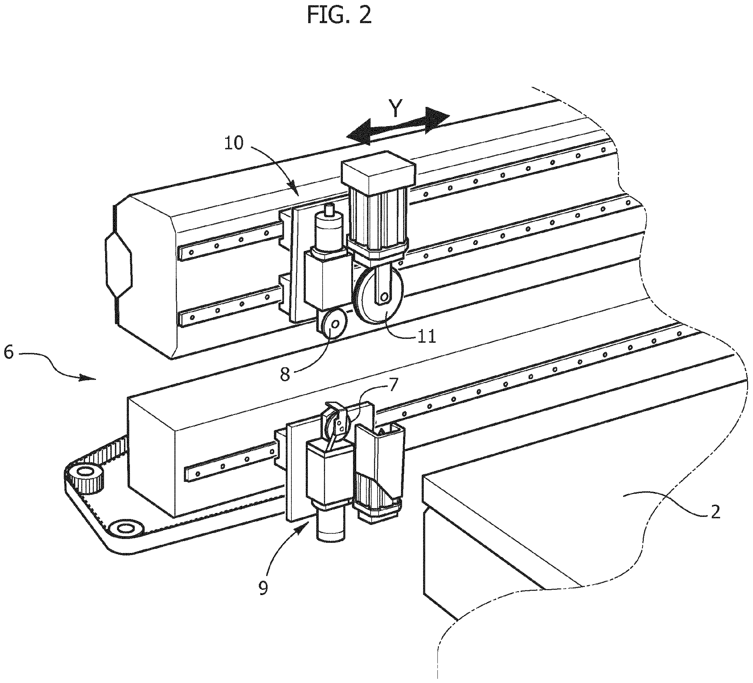

Owing to the relative complexity of such operations, the bridge 6 is fixed with respect to the working bench, in so far as it exhibits a highly complex and heavy structure. An example of the equipment of the fixed bridge 6 is visible in figure 2.

With reference to figure 2, the fixed bridge 6 comprises roller incision tools 7 and 8 arranged respectively below and above the working plane 2, carried respectively by an upper carriage 10 and a lower carriage 9 slidable along the direction Y (with transverse orientation with respect to the machine 1) on the bridge 6. The cutting bridge 6 is furthermore provided with actuator means (not illustrated) of the movement of the carriages 9 and 10 along a direction Y.

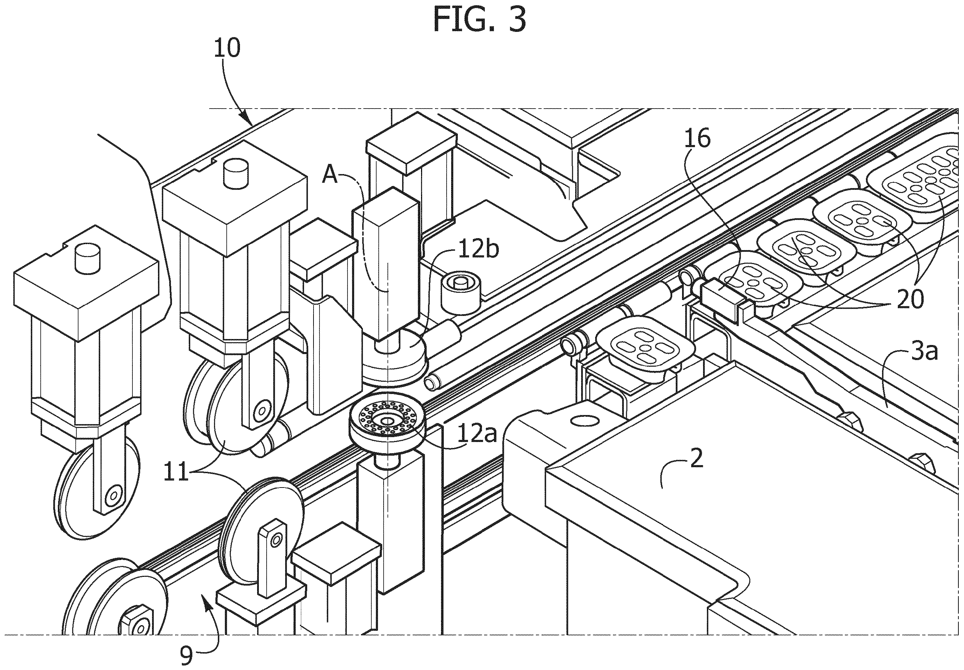

Yet provided on the bridge 6 are means for the breaking of the upper sheet and the lower sheet, among which it is included for example a breaking wheel of the type indicated by the reference 11 in figure 2 and in the subsequent figure 3. There are furthermore provided heating means of the plastic film (not illustrated) that come into play subsequently to the breaking operation, and prior to the detaching step.

In the present description and in the drawings attached thereto, the constructional details of the cutting machine, of the carriages 9 and 10 and of the way by which they are mounted slidable along the cutting bridge 6, of the incision wheels 7 and 8 and of the pushing rollers 11 and of the way by which they are mounted movable on respective carriages 9 and 10 are not shown, in so far as they may be provided in whatever known manner and also in so far as they do not fall, considered per se, within the scope of the present invention.

The same applies to the way by which the movements of the carriages 9 and 10 are controlled, as well as those of the wheels 7, 8 and 11. Such movements, in accordance with the prior art, are controlled by means of respective electric motors and control transmissions not illustrated and not shown.

Furthermore, yet in accordance with the prior art, the electric motors that operate the various movable parts of the machine 1 are controlled by electronic control means which can be programmed to allow the performance of predetermined working cycles on the sheets L to be processed.

As a consequence of the structure and arrangement mentioned above, such machines are capable of performing the cut of laminated glass sheet solely along a rectilinear line defined by the longitudinal direction of the fixed bridge 6, parallel to the aforementioned direction Y. The glass sheet must thus be rotated in disparate positions below the cutting bridge 6 to perform rectilinear cuts along the different edges thereof. For example, in order to cut a starting sheet plural times to obtain a smaller sheets, the sheet is subdivided in plural transverse sheets (transverses) and after cutting of each strip the latter is rotated 90° to subdivide it in plural portions with subsequent cutting operations to generate finished products or primitives configured to receive a diagonal cut.

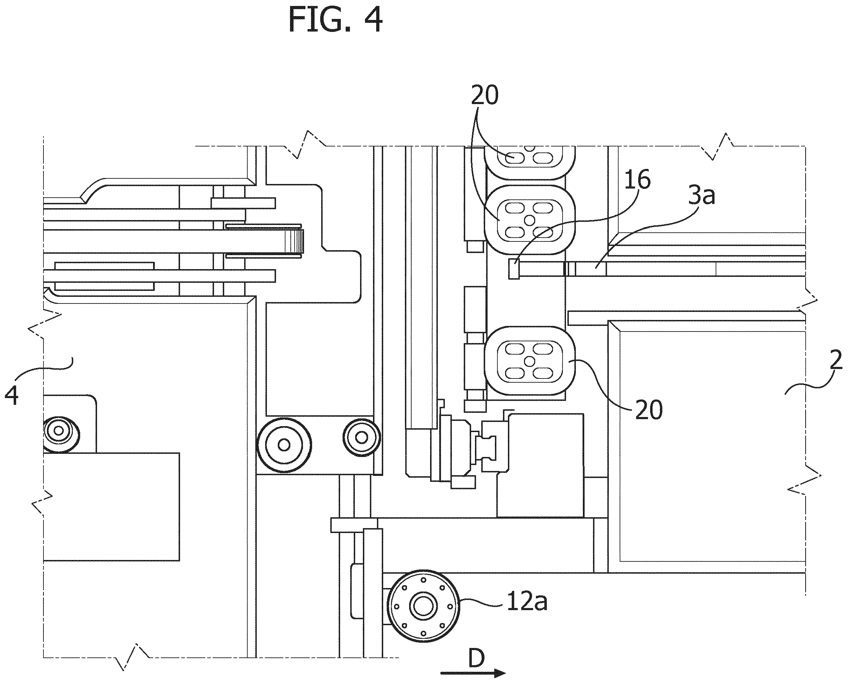

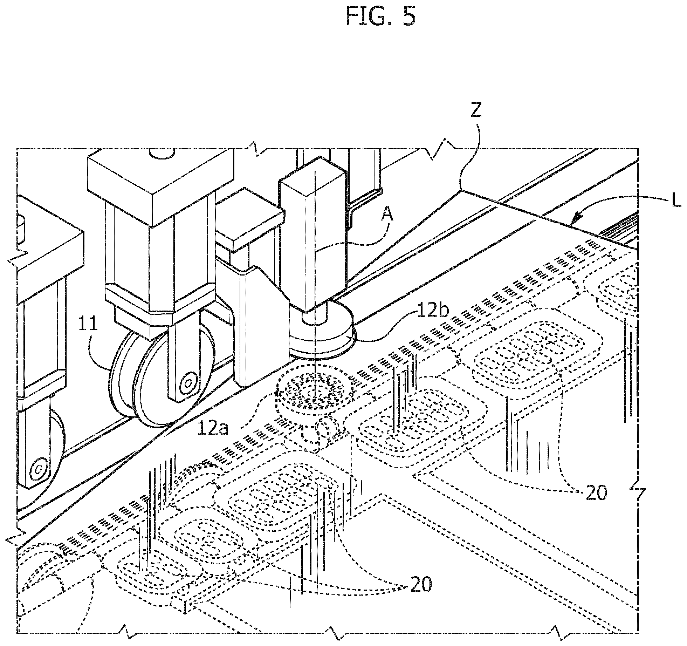

With particular reference to figure 3 to 5, the machine 1 comprises a first engagement member consisting in a suction cup gripping member 12a (in the following, for brevity, "suction cup 12a" or "lower suction cup 12a"), and a second engagement member consisting in a cooperation member 12b, also being of the suction cup type (in the following, for brevity, "suction cup 12b" or "upper suction cup 12b"). The elements 12a, 12b are carried respectively by the aforementioned lower carriage 9 and upper carriage 10. The suction cups 12a and 12b are carried by respective carriage which can be displaced along the bridge 6 in the direction Y (that is to say along the cutting line T) thanks to actuator means of the movement of the carriages not visible in the figures. The suction cups 12a, 12b are arranged coaxial to one another and are mounted freely rotatable around a vertical axis A (that constitutes also the corresponding longitudinal axis thereof). The suction cups 12a and 12b are furthermore communicating with a depression source not shown in the drawings.

The lower suction cup 12a is configured to engage the lower face of the sheet L adjacent to the trailing edge B thereof, while the upper suction cup 12 is configured to engage the upper face of the sheet L: to this end, the carriage bearing each suction cup is also displaceable in the vertical direction (orthogonal, therefore, to the transverse direction Y) so as to provide a displacement of each suction cup 12a, 12b along the vertical axis A between an engagement position of the sheet L and a position spaced from the sheet (resting position) owing to the positioning thereof on the bridge 6, the resting position corresponds to a lowered position for the suction cup 12a and a raised position for the suction cup 12b, while the engagement position corresponds to a raised position for the suction cup 12a and a lowered position for the suction cup 12b.

The maximum dimension of the suction cup 12a is defined by the empty space available between the working plane 2 and a feeding plane 4, respectively upstream and downstream of the cutting line T defined by the cutting bridge 6.

In an alternative embodiment, not shown in the figures, a co-operation member may be used which is configured to act in conjunction with the suction cup 12a and adapted to engage the face of the sheet L opposite to that engage by the suction cup member 12a.

The member 12b may be provided as a pusher member adapted to push the sheet L against the suction cup member 12a that engages the opposite face of the sheet L.

The actuator means of the axial displacement of the suction cup 12a and the actuator means of the axial displacement of the cooperation member 12b (or the suction cup 12b) are chosen among a hydraulic actuator, pneumatic actuator, an electromechanical actuator comprising an electric motor and a screw-nut system controlled by the electric motor.

In a known manner, the machine 1 furthermore comprises a plurality of suction cups 20 aligned and arranged on the edge of the working plane 2 that extend in the direction Y, that is parallel and adjacent to the cutting line T. The suction cups 20 are communicating with a depression source, not illustrated. Such suction cups 20 serve to lock the sheet L during the cutting and breaking operations.

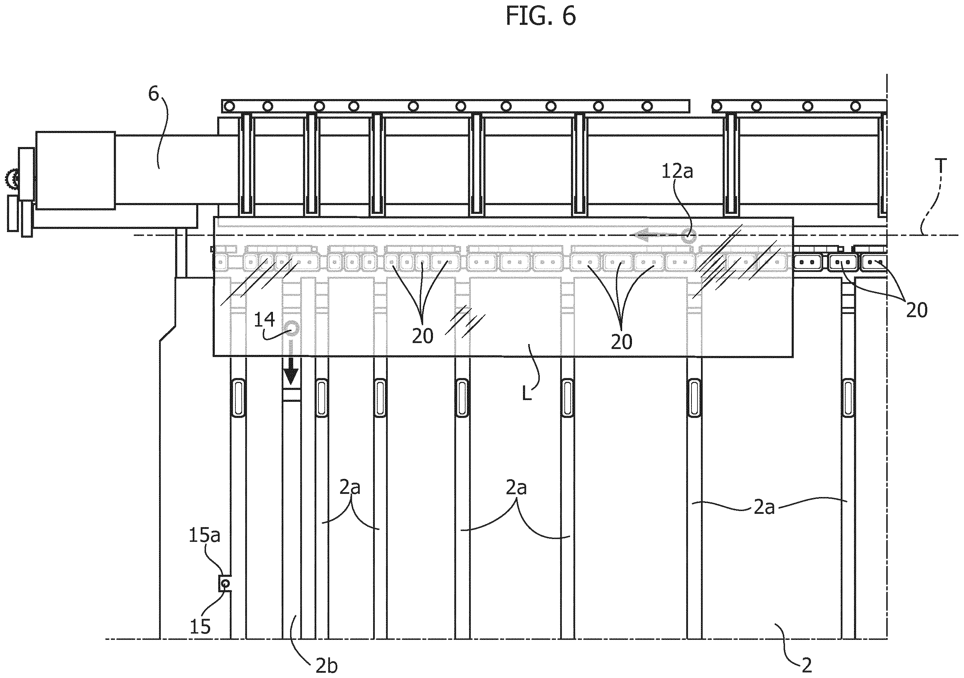

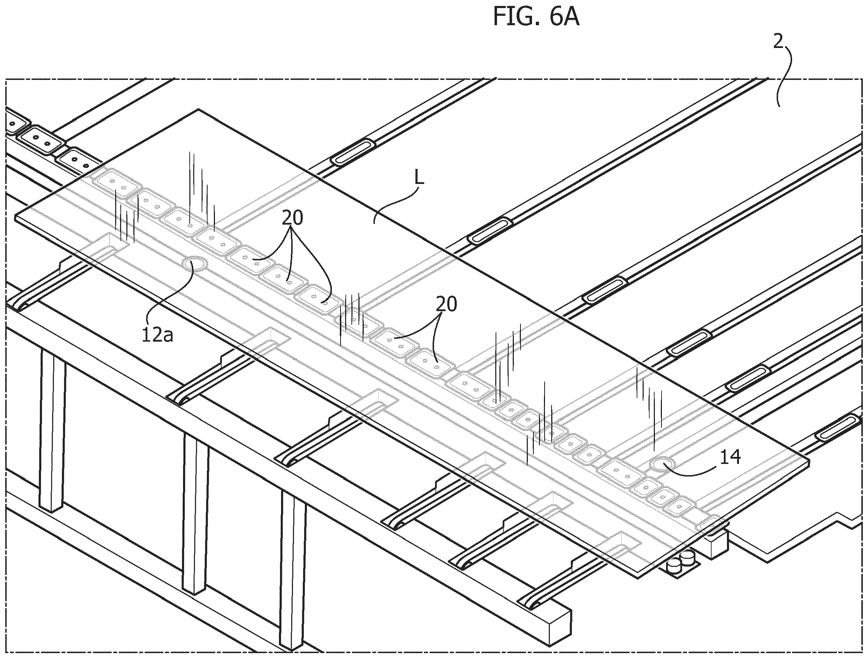

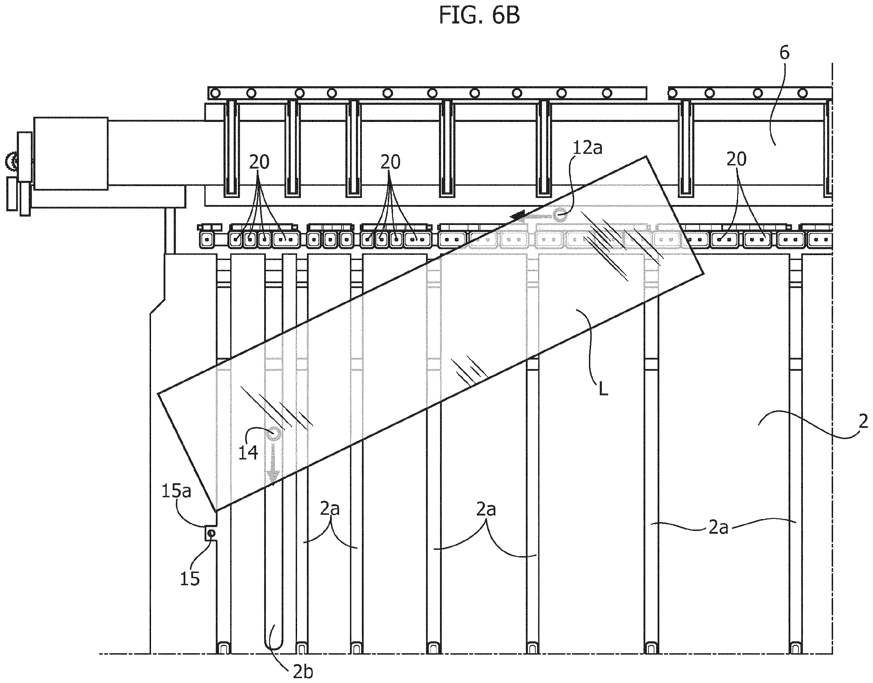

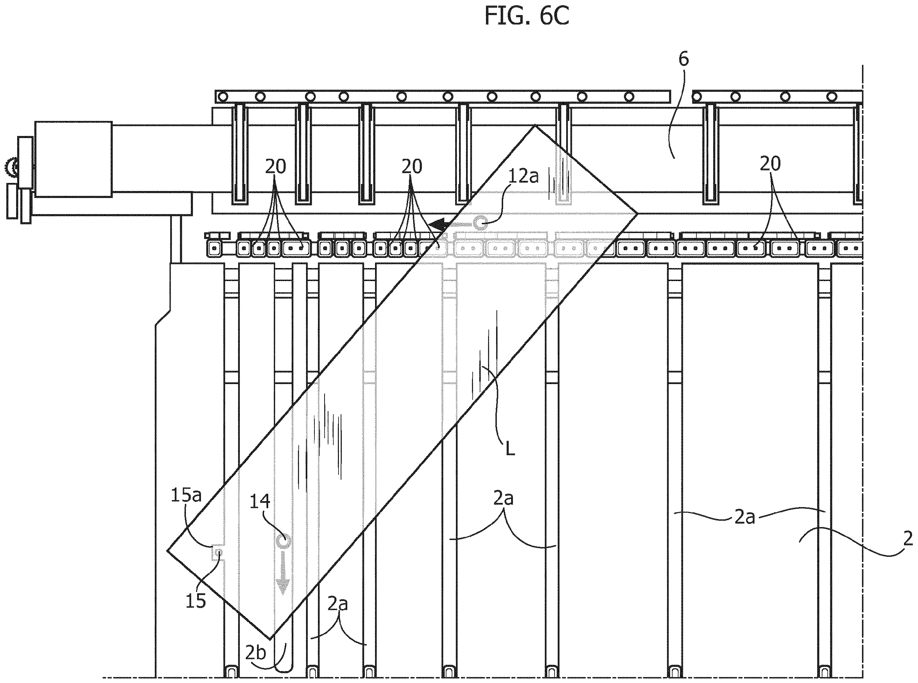

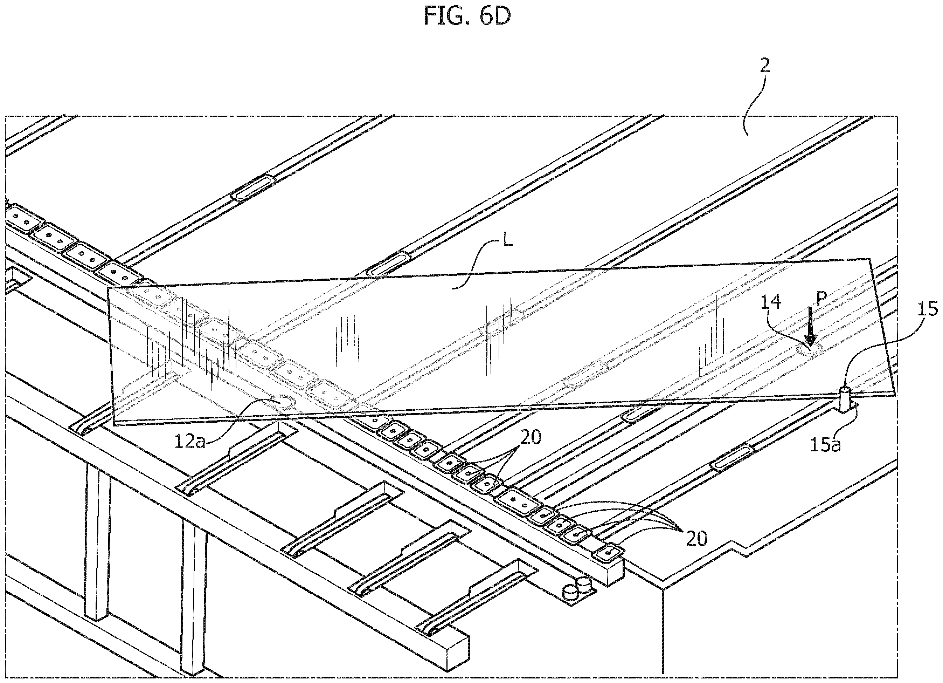

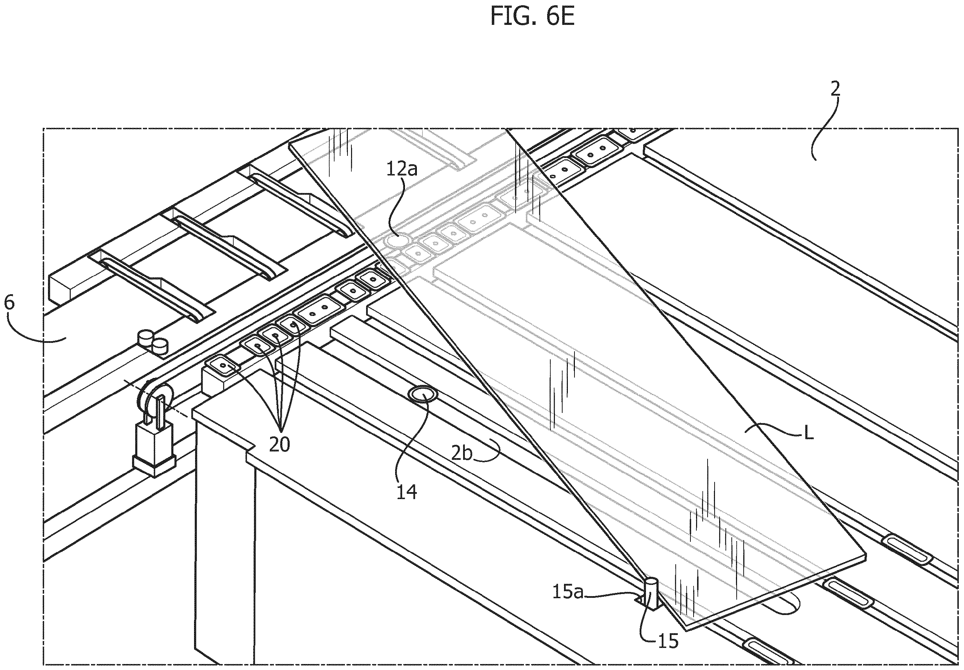

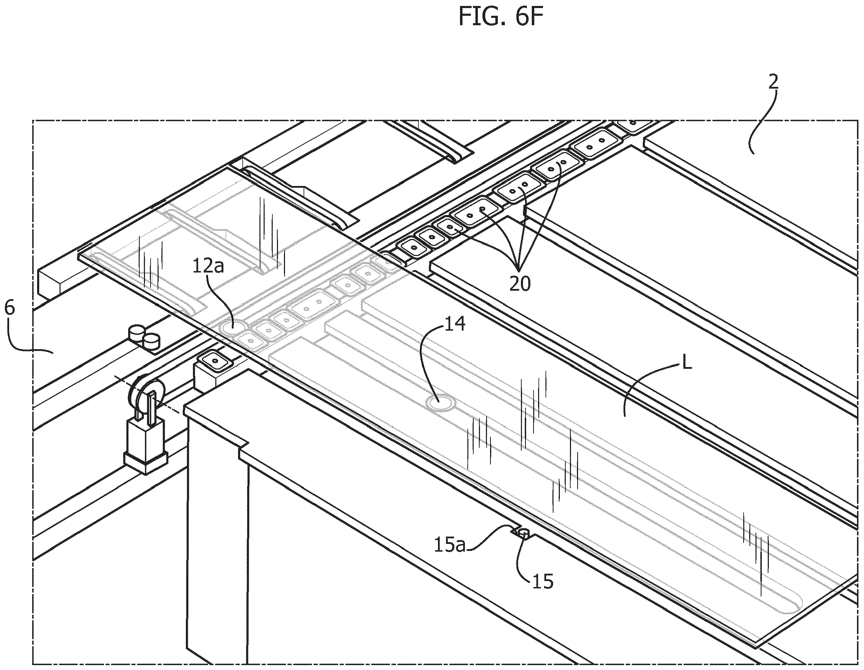

With reference to figure 6, the machine 1 comprises a further (third or second as a function of the embodiment) engagement member consisting in a suction cup gripping member 14 (in the following, for brevity, "suction cup 14") which is adapted to engage the sheet L in a point which is spaced with respect to the suction cup 12a. To this end, the suction cup 14 is displaceable along a vertical axis parallel to the axis A in a way overall similar to what already described in relation to the suction cup 12a, so as to engage the lower face of the sheet L when desired.

Similar to the suction cup 12a, also the suction cup 14 is provided with a movement in a direction belonging to (or parallel to) the abutment plane 2. In particular, while the suction cup 12a is movable along the direction Y of the cutting bridge 6, the suction cup 14 is movable along the direction X of the abutment plane 2.

To this end, the suction cup 14 is carried by an auxiliary bridge 3 movable below the abutment plane 2 downstream of the fixed cutting bridge 6 and is adapted to engage the sheet L through a longitudinal slot 2b of the abutment plane 2. The auxiliary bridge 3 can be translated in the direction of advancement X of the sheet L to displace the sheet in this direction.

The auxiliary bridge may for example be provided as a measuring reference bridge 3, per se known, typically used with the aim of positioning the glass sheet for cutting a transverse to size starting from a semi-processed sheet. With reference to figure 1, the reference measurement bridge 3 comprises a plurality of articulated arms 3a, wherein stop members or abutment fingers 16 are mounted, against which the leading edge of the sheet is set to position the latter with the aim of cutting to the desired sizes.

The auxiliary bridge 3 is provided with a series of stopping member 16 which can be raised above the abutment plane 2 through slots 2a provided on the working bench 2 and configured to stop the sheet in the position corresponding to the desired cutting sides.

The suction cup 14 is an additional element with respect to the stop members 16 and is installed on the auxiliary bridge 3 parallel to the first articulated arm 3a. The suction cup 14 is activated and deactivated by displacing it through a longitudinal slot 2b of the abutment plane 2 (both in the vertical direction, and in the longitudinal direction X). The slot 2b is parallel to the slots 2a, but in an alternative embodiment, the longitudinal slot 2b may coincide with a slot 2a of the reference.

The machine 1 furthermore comprises an electronic control unit PC configured to control a synchronous movement of the first suction cup grip member 12a along the direction Y and a second suction cup gripping member 14 along the direction X to obtain a rotation of the sheet L on the abutment plane 2.

Again with reference to figure 6, the rotation means comprise furthermore an engagement element 15 in the form of a roller (in the following, for brevity, "roller 15") rotatable around a vertical stationary axis.

The roller 15 can be vertically displaced between a standby position (see figures 6C, 6F) and a working position (see for example figures 6D, 6E). The roller 15 is housed in a seat 15a provided on the working plane 2, both in the resting position, both during the movement towards the working position.

In the standby position of figures 6C, 6F the roller 15 is retracted below (or approximately flush, but yet slightly below) the working plane 2, while in the working position of figures 6D, 6E the roller 15 is located in an extracted position and protruding with respect to the working plane 2.

The operation of the machine 1 in point will now be described with a particular reference to a rotation operation of the sheet L with a magnitude of 90° with the aim of providing an orthogonal cut. Such an operation is performed in an automatic fashion according to the modalities that will now be described. The description of the 90° rotation operation of the sheet L performed in an automatic fashion does not form per se the subject of the invention, but is only aimed at a better appreciation of the operation of the machine 1 and, moreover, it is functional to the demonstration of the advantages of the method according to the invention with respect to rotation methods performed in an automated manner. Unless specified otherwise, the sheet L that is referred to is a transverse cut starting from "raw" sheet of bigger dimensions.

The electronic control unit PC is programmed to control the movement of the suction cup 12a (and the suction cup 12b), if it is the case, or possibly of the pushing member 12b (in the alternative embodiment) of the suction cup 14 and the roller 15 along the respective movement direction and between the respective operating position (rest and work), with the aim of providing a rotation of a sheet L by an angle equal to 90%.

The operating sequence of rotation of the sheet L is schematically illustrated in figure 6A-6F and includes the following steps.

Figure 6 shows the condition preceding the beginning of the rotation operation. In particular the sheet L has the trailing edge thereof B positioned on the cutting line T (or upstream thereof) and the suction cup 12a and 14 are in the respective resting position which is lowered and detached from the sheet L.

Such condition corresponds to the ending of the cut of the transverse and to the backwards motion of the starting sheet on the feeding plane 4.

In a first step shown in figure 6A the electronic control unit PC sends a signal to the actuator unit that controls the vertical movement (along the axis A) of the suction cup 12a and to the actuator unit that controls the vertical movement (along an axis parallel to the axis A) of the suction cup 14, so as to bring both the suction cups 12a, 14 to engage the lower face of the sheet L; these equals to raised suction cups 12a, 14 until the contact with the lower face of the sheet L with a subsequent activation of the depression source to couple thermally the sheet L to the aforementioned suction cups.

Preferably, the suction cups 12a and 14 may preliminarily be displaced along the axes Y and X respectively when they are located in positions not covered by the sheet L that has to be rotated.

Once the engagement of the suction cups 12a, 14 with the sheet L is completed, in a second step (figure 6B) the sheet L is set in rotation by means of a simultaneous displacement of the suction cups 12a, 14 along the respective directions of movement Y and X. The rotation has here counterclockwise direction.

The rotation goes on until reaching (figure 6C) and exceeding (figure 6D) an overlapping condition of the roller 15.

Upon reaching the condition of figure 6D, the suction cup 14 is disengaged from the sheet L and brought back to the corresponding resting position, while the roller engagement member 15 is brought in the raised position thereof (working position) visible in figures 6D, 6E. Owing to this, the rotation of the sheet L goes on until completion (figure 6F) comes to the combined action of the movement in direction Y of the suction cup 12a and roller 15, which exerts a guiding action for the sheet L. The suction cup 14 is preferably displaced backwards towards the resting position thereof, for example by bringing it back to the position of figure 6A by repositioning of the auxiliary bridge 3 in view of a subsequent cutting operation, which will start as soon as the rotation operation is over.

In alternative embodiments it is furthermore possible to envisage an adjustment of the position of the roller 15 along the direction X before the beginning of the rotation operation (the roller 15 will maintain than the position assigned along the direction X during the rotation operation of the sheet L). This has the effect of allowing to work with sheets L of different dimensions.

In yet further embodiments it is possible also to envisage a machine provided with a plurality of engagement members 15 of the roller type arranged along the direction X evenly distributed, and at different distances with respect to the cutting line T, defined by the cutting bridge 6, to engage the side edge of glass sheet having different dimensions.

In this case the above mentioned electronic control unit PC is programmed to activate only one at a time of said engagement members of the roller type 15 and the engagement member is selected according to the features of the sheet to be rotated.

The automatic rotation method is so concluded, and turns out to be rather complex, in so far as it involves a plurality of different devices to bring the rotation of the transverse to completion.

Differently from what described so far, the method according to the invention envisages rotation of the transverse on the abutment plane 2 achieved in a completely manual fashion by an operator which is in charge of the machine 1 with the assistance of electronic means for detecting the initial position of the sheet and for the monitoring of the current position of the sheet during rotation. By way of example, the method according to the invention will be shown with reference to a diagonal cut operation and implemented by means of the machine 1 described so far, by making use of the equipment already on board the machine with minimum modifications of the same and of the control software.

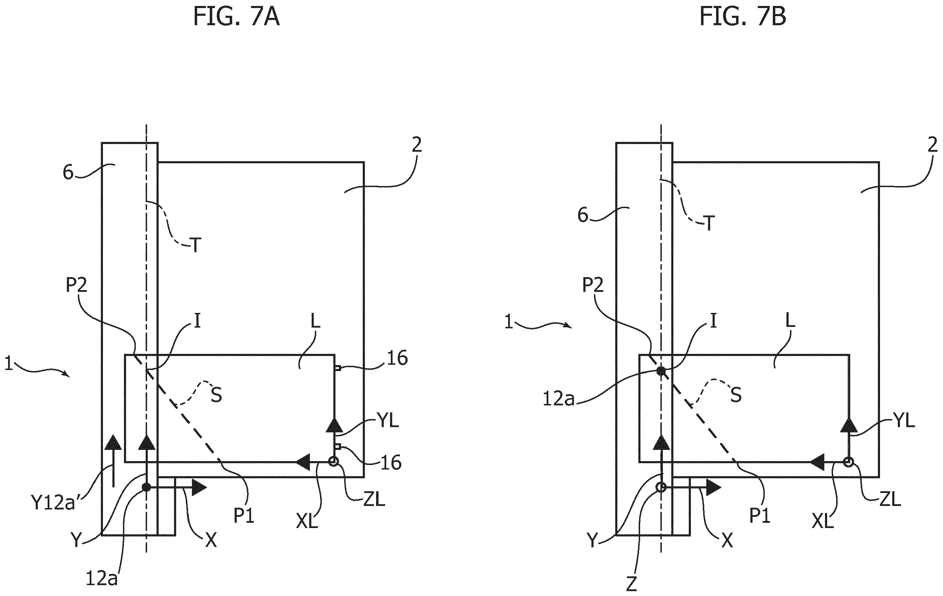

The method according to the invention comprises a first step of detection of a position of the glass sheet with respect to a working plane of the machine 1 by means of an electronic system for detection of the position. In the present specific example, the working plane is represented by the abutment plane 2 downstream of the cutting line, wherein the transverse just cut from the semi-processed starting sheet is located. For reference, a sequence corresponding to the method according to the invention is shown in figures 7A-7D.

The electronic system for detection of the position may comprise, in combination or in alternative:
- the sensor package that equips the reference measuring bridge 3, and that controls the motion of the articulated arms 3a;
- a unit for optical detection of the position of the sheet including the plurality of cameras configured to frame the plane 2 and process the acquired images by means of a software that allows to extract a position information of the sheet itself,
- a laser light optoelectronic system (or equivalent thereof).

To this end, figure 7A shows schematically the aforementioned first step of the method: note the position of the abutments 16 in contact with the edge of the sheet L.

Once the detection of the position of the glass sheet with respect to the abutment plane 2 is done, a step follows wherein a human-machine interface that equips the machine 1 for cutting glass sheets previously described provides the operator with an information relative to the position of the glass sheet itself.

This may comprise, for example, the display - on the human-machine interface - of the position of the glass sheet detected by the electronic system for detection of the position, whatever the type; in particular, the human/machine interface may comprise a display wherein the desired position and the current position of the glass sheet are visualized, wherein the definition "current position" corresponds both to the initial position of the sheet, and to the position of the glass sheet while the latter is moved by the operator. As far as this latter aspect the discussion will be expanded in the following paragraphs. Alternatively to the visualization proper of the sheet L in the two positions (current and desired) it is possible that the human-machine interface simply be limited to informing the operator as to the position of the sheet L by means of the display of the coordinates of certain characteristic points of the sheet.

It is furthermore to be noted that the human-machine interface may, in this step, also omit to provide explicitly the position of the sheet to the operator. The position may be provided to the unit PC in a transparent fashion with respect to the operator to which -on the contrary- only information about the movement that he will have to carry out may be shown, as well as information in respect of possible further positioning operations (carried out possibly automatically by the machine) preliminary to the aforementioned movements. This will be made clear in the following description.

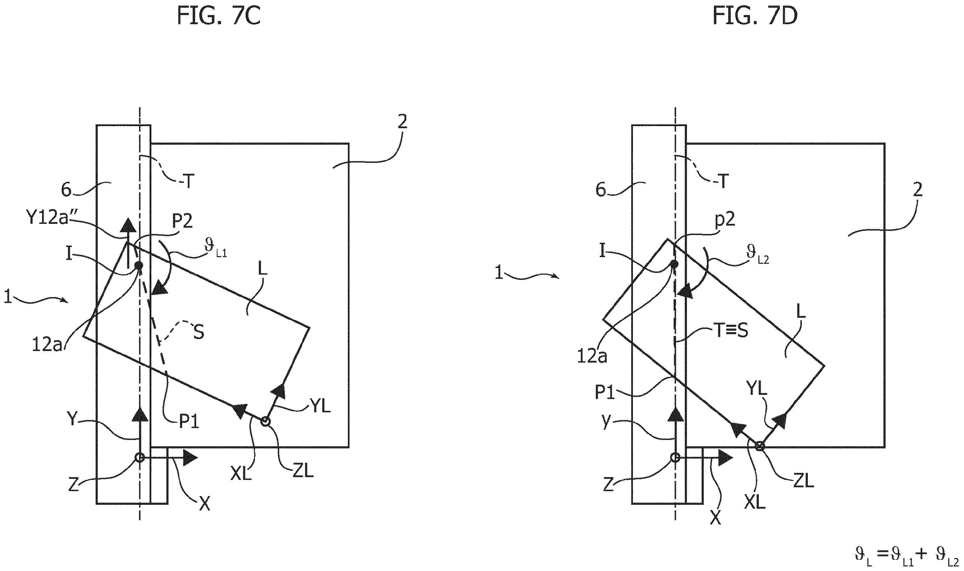

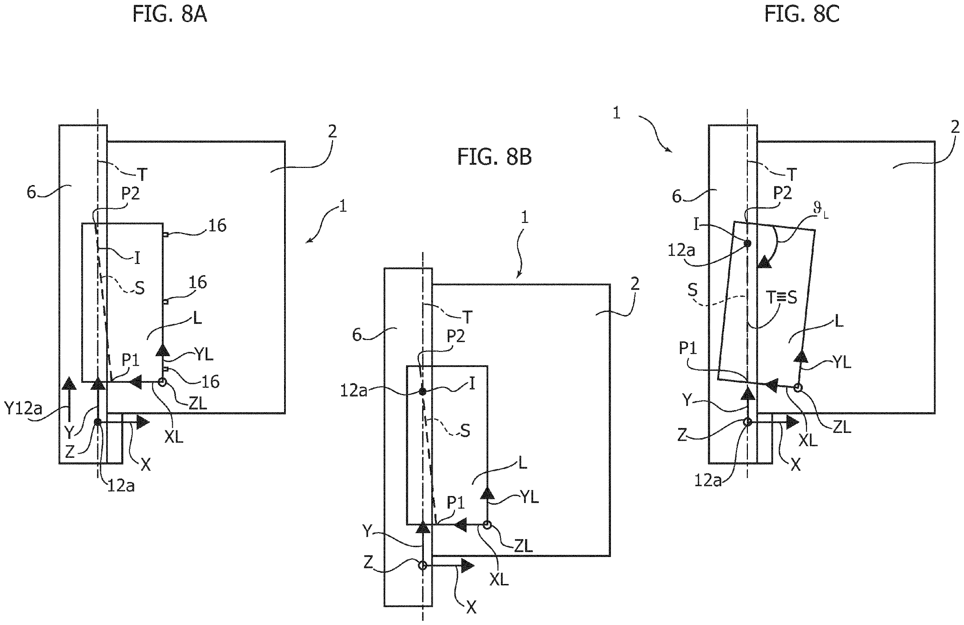

In case of a method implemented on a glass cutting machine such as the machine 1 described herein, the desired position of the glass sheet corresponds to a position wherein an alignment of the cutting line T of the machine 1 and a desired cutting line S on the glass sheet occurs. Such condition is schematically represented in figures 7D and 8C. It should furthermore be noted that the cutting line S is not orthogonal to any side of the sheet L, being the cutting operation - as anticipated- a diagonal cut operation.

Among the most significant advantages with respect to known methods, the method according to the invention allows to eliminate the manual marking operation of the glass sheet L in correspondence of the end points of the desired cutting line. On the contrary, the desired cutting line is provided as an input data to the electronic unit that controls the machine 1 (in this case the unit PC), and in particular it may be provided in form of coordinates of the intersection points of the cutting line S with the edges of the sheet L. The intersection points are indicated in the figures 7A-7D (and 8A-8C) by the references PI, P2. Such coordinates may be given as a function of a local reference system of the sheet L, for example a reference system centred in correspondence of one of the vertices of the sheet L itself. By way of example, in figures 7A-7D and 8A-8C the local reference system of the sheet L is centered in the low right angle of the sheet L (with reference to the plane view of the figures) and it is identified by the longitudinal axis XL, transverse axis YL, vertical axis ZL. The axis X (longitudinal), Y (transverse), Z (vertical) identify instead the reference system of the machine 1 already described previously. By way of example, the reference system X-Y-Z of the machine 1 may be chosen so as to coincide with the standby position of the suction cup 12a: in this manner the system X-Y-Z is centered on the cutting line T.

It should furthermore be observed that also the dimensions of the sheet L are provided as an input data to the machine 1, for example as coordinates of two of the vertices opposite to the reference system XL-YL-ZL (from which the dimension information along the direction XL and YL are derived).

Based on such input data, and also detected the position of the sheet L with respect to the working plane of the machine 1 (the plane 2), the control software installed on the machine 1 and configured for the implementation of the method according to the invention goes on to determine the position of the reference system XL-YL-ZL of the sheet L with respect to the reference system X-Y-Z of the machine 1 and to refer the coordinates of the intersection points PI, P2 with respect to the system X-Y-Z. It should furthermore be observed that - once the two points PI, P2 are known - it is possible to define an equation that describes the desired cutting line S in whatever references (be it X-Y-Z, or XL-YL-ZL).

Once all the information above are known, the control unit of the machine 1 may thus determine which movements are necessary to bring the cutting line S to coincide with the cutting line T, and in particular it can determine what the magnitude of the rotation around the axis Z is (note: the magnitude is the same with respect to the axis ZL) that allows to establish a parallelism condition between the cutting lines T and S. Such a rotation is indicated by the reference θ_{L} in figures 7 and 8. The calculation of the rotation θ_{L} around the axis Z constitutes an important parameter as far as reaching the desired position is concerned. As a matter of fact, the coincidence condition of the cutting lines T and S cannot be independent of reaching a condition of parallelism of the two lines. Therefore, whatever the chosen manner to complete such rotation (around an axis, as in the example described herein or by motion composition in other examples that will be described subsequently), the latter constitutes an object to reach in order to position the sheet L.

With reference to figures 7A, 7B preliminarily to the subsequent manual handling step of the sheet by the operator the method includes the following steps:
- preliminary positioning of the glass sheet L so that a first vertical plane containing the desired cutting line S provides an intersection I with a second vertical plane containing the cutting line T of the machine 1: to this end, it should be observed that the intersection between the two planes, both orthogonal with respect to the abutment plane 2, is itself aligned parallel to the vertical direction. Such step is preferably carried out automatically by the measurment reference bridge, that is by means of displacement of the abutments 16 along the slots 2a (thus in direction X). It should furthermore be observed that such step does not bring about any rotation whatsoever of the sheet L;
- displacement of the suction cup 12a in the Y direction (arrow directed and pointing in accordance with Y12a') up to a position such that the axis of rotation A of the suction cup 12a coincides with the intersection I of the first and the second vertical planes. Such a condition is schematically represented in figure 7B;
- engagement of the glass sheet L by means of the suction cup 12a, which is raised to exert a suction action on the lower face of the sheet L according to the modalities previously described.

The engagement of the suction cup 12a with the sheet L in correspondence of the intersection I determines the features of the movement of the sheet L on the abutment plane 2 during the manual handling step of the sheet. In particular, the engagement of the suction cup 12a in correspondence of the intersection I forces the sheet L to a rotational motion around the axis A. Such rotational motion can be possibly overlapped with other linear motions, as will be described now.

An example of motion composition is shown in figure 7C that schematically shows a further step of the operating sequence corresponding to the method according to the invention. In this case a further motion of the suction cup 12a in the direction Y is controlled (arrow directed and pointing according to Y12a") having as a result that of translation of the sheet L in the direction Y and a subsequent induced rotation of the sheet L around the axis A as a consequence of an action that does not cross the center of gravity such as the dragging action of the sheet 12 positioned in correspondence of intersection I. The induced rotation is indicated by the reference θ_{L1} and corresponds to a portion of the rotation θ_{L}.

The displacement of the sheet 12a is made in this case necessary because the dimensions of the transverse in the longitudinal direction X are such that a rotation thereof around the axis A starting from the position of figure 7b will surely result in an outing of the sheet L with respect to the perimeter of the abutment plane 2, with subsequent danger for the safety of the operator.

If should furthermore be observed that the further displacement with direction and heading in accordance with Y12a" is not strictly necessary: it is requested generally whenever the possibility exist that the sheet L goes out of the abutment plane, but it is not necessary, for example, in the operating situation of figures 8A-8C: to this end, figures 8A, 8B correspond substantially to figures 7A, 7B with the sole difference of the lower dimensions in a longitudinal direction of the sheet L. Owing to this, and also owing to the orientation of the desired cutting line S, it is highly unlikely that the sheet L goes out of the abutment plane 2 during the rotation around the axis A, so that the sole positioning step of the suction cup 12a in correspondence of the intersection I is enough. As a consequence, in the sequence of figures 8A-8C a figure corresponding to figure 7C is absent: figure 8C is in fact corresponding to figure 7D, which will be described shortly.

The operating sequence of figures 7A-7C, although it requires the performance of a further operation (displacement of the suction cup 12a along the axis Y) turns out to be extremely advantageous whenever low-emission glass transverses (or primitive sheets) which are very big have to be rotated. By the automated rotation methods generally one does not have a sufficient freedom of positioning of the sheet during rotation, in so far as the possibility of displacement of the sheet are strongly limited by the features of the displacement system. This dictates, for example, to flip the low-e glass sheet upon the occurrence of potential dangerous situation such as those (avoided) in the sequence of figures 7A-7D. The flipping operation is made necessary to avoid the outing of the sheet from the plane 2, but at the same time it requires abutting the face treated with the low-e coating on felt cloths that cover the plane 2 during processing of said kind of glass. Despite the felt clothes being chosen so as to make the least possible damage to the low-e coating, the damages are other than infrequent. On the contrary, thanks to the method according to the invention it is possible to get rid of any kind of constraint or structural complexity of the handling system, thereby rendering the position of the sheet preliminary to the rotation much more free and feasible, and such that resorting to flipping of the sheet itself is avoided.

Once the preliminary operations above are over, the method envisages manual handling proper of the glass sheet by an operator. Handling occurs along the abutment plane 2 and has the aim of bringing the sheet in a desired position, here corresponding to the condition of figures 7D and 8C wherein the cutting line S is aligned to the cutting line T of the machine 1. This equals to manually imparting a rotation θ_{L2} further to the rotation θ_{L1} induced by dragging the sheet L by the suction cup 12a (figure 7D, with θ_{L1}+θ_{L2}= θ_{L}), or to covering the whole magnitude of the rotation θ_{L} required to reach the parallelism condition between the cutting lines T and S (figure 8C).

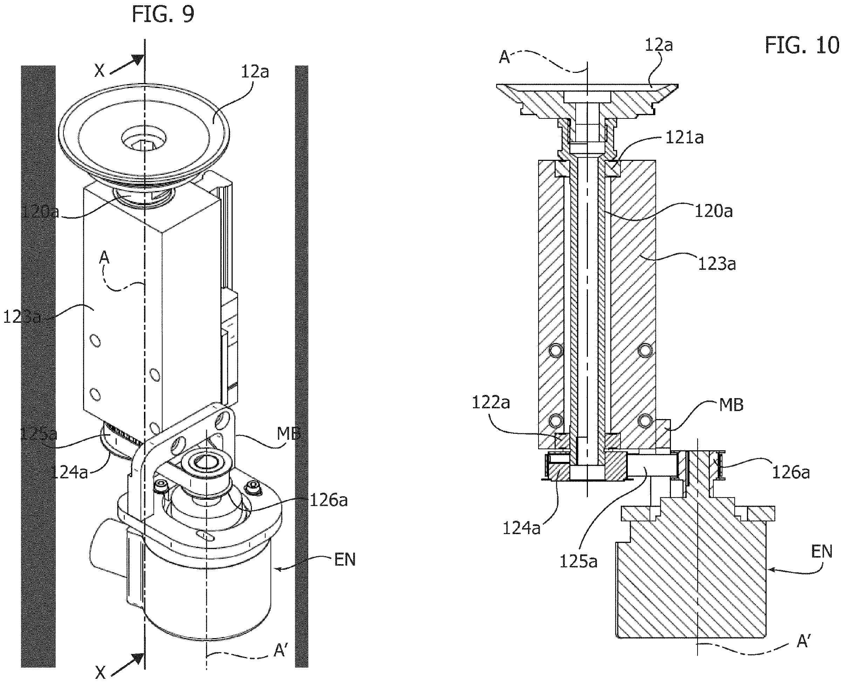

As anticipated, and with reference to figure 9, 10, such step is electronically assisted: in particular in case of diagonal cutting method, (or else orthogonal) implemented on the machine 1, the electronic assistance is made by means of arranging of an angular position transducer connected in rotation to the suction cup 12a. In a preferred embodiment subject to figures 9, 10 such transducer is an encoder EN. In such embodiment, the suction cup 12a is connected in rotation to a shaft 120a rotatably supported by a pair of bearings 121a, 122a within a casing 123a, which is vertically movable along the axis A.

A bracket MB fixes the casing of the encoder EN to the casing 123a. A first toothed pulley 124a is fixed at an end of the shaft 120a opposite to the end where the suction cup 12a is located, and a toothed timing belt 125a is fitted thereon, which also fits on a second toothed pulley 126a thereby connecting the encoder EN and the suction cup 12a in rotation.

The choice of pulleys and toothed belt is to be considered preferred in so far as it allows to avoid slips between the belt and the pulley, which would compromise the correct detection of the angular position by the encoder EN.

By means of the encoder EN it is possible to provide a monitoring of the current position of the glass sheet handled by the operator during the manual handling step (as well as during the possible induced rotation step as a consequence of the dragging of the sheet by the suction cup 12a). In this way, it is possible, within the framework of the monitoring step of the current position of the sheet L, to compare the monitored position (that is the current position of the sheet in any moment of time in which the monitoring is carried out) with the desired position of the glass sheet. Note also that preferably the pulley 124a has a larger diameter (preferably twice) with respect to the pulley 126a: in this way, every rotation of the suction cup 12a (thus of the sheet L) is transferred in a mechanically amplified manner to the axis of the encoder EN, thus allowing a more effective detection of small entity displacements.

Thanks to the comparison between the monitored and desired position it is possible to signal to the operator a condition of achievement of the desired position by means of the human/machine interface, so that the operator may stop his action.

To this end, the human/machine interface includes an acoustic signalling device configured for signalling a proximity condition of the glass sheet L with respect to the desired position. The acoustic signalling device is configured both for emitting an acoustic intermittent signal with variable frequency, both for the emission of continuous acoustic signal. This allows to distinguish the various proximity conditions that occur during movement, until reaching the desired position.

In particular, during the step of signalling to the operator a condition of achievement of the desired position the acoustic signalling device is operated so as to emit, alternatively:
- an acoustic intermittent signal with a frequency progressively increasing with the approaching of the glass sheet L to the desired position, and
- a continuous acoustic signal upon reaching of the desired position by the glass sheet L.

In this way the operator will have evidence of the approaching of the desired position buy the increase of repetition frequency of the signal, and will have furthermore evidence of the reaching of the desired position by listening to a continuous acoustic signal.

A visual type signalling may be combined with (or replacing) the acoustic signalling of the proximity condition of the sheet L with respect to the desired position. For example, two laser light fans may be used in combination, one indicating the cutting line T, the other indicating the cutting line S. The latter light fan may be generated, in case of implementation of the method on the machine 1, by means of replacement of the suction cup (or the cooperation member 12b) with a laser light illuminator configured to emit a light fan and mounted with a vertical axis and coaxial to the axis A.

Such laser light illuminator may be provided with a motor that operates it in rotation around the axis A so as to project on the sheet L the cutting line S. To this end, provided that the suction cup 12a is positioned in correspondence with the intersection I, it is simply sufficient to operate the illuminator along the direction Y in an identical manner with respect to the suction cup 12a, so that any cutting line may be projected on the sheet L in so far as it will simply make up one of the lines of the bundle centred in the point I.

During manual rotation of the sheet L by the operator a camera system may frame the area of the cutting line T, thereby providing at each time instant a visual evidence of the position of the lines T and S on the display of the human/machine interface. To this end, the actuator unit that operates the illuminator 12b in rotation will have to be driven so as to replicate exactly the angular position signal provided by the encoder EN so as not to alter the positioning of the cutting line S projected on the sheet L during rotation.

The camera system may furthermore be configured for a real time data transmission to a software for image processing capable of recognizing the position of the laser light lines that represent the lines T and S, so as to visually signal to the operator the current proximity condition. For example, the approaching of the desired position may be signalled by visualization of a colour bar progressively going from red to green (red: starting condition, orange: approaching condition, green: desired position reached).

As said, such measure may be combined with the acoustic signalling (in order to have redundant system for verifying the consistency of the result) or replace it at all.

Once the desired position is reached (figure 7D, 8C) the operator may start the usual cycle of cutting, breaking, PVB film heating, and detachment of the two portions of sheet upstream and downstream of the cutting line T, provided that the lines T and S are aligned. The cutting cycle may be performed, for example, in accordance with what described in European patent N. EP 2 177 482 B1 in the name of the same Applicant.

It is furthermore to be noted that during all the steps that involve whatever movement of the sheet L with respect to the plane 2 the ejection of air from nozzles distributed along the plane 2 itself is controlled with the aim of reducing friction between the sheet L and the plane 2 to the minimum. The air ejection system is de-activated only upon reaching the desired position.

In an alternative embodiment of the method according to the invention, the engagement member of the sheet L may not be the suction cup 12a but a square type member (having an L-shaped geometry) movable along the plane 2 and configured to engage a vertex of the sheet L - for example that wherein the reference system XL-YL-ZL is positioned - and provided with a rotary movement around an axis parallel to the vertical direction Z, and of one or more linear movements along the directions X and Y (only X, only Y or both).

The square element may be for example positioned in place of the suction cup 14 of the machine 1.

Also, in this case the use is envisaged of an angular position transducer, such as for example the encoder EN, connected in rotation to the square type member mentioned above (possibly with the same pulley transmission already described with reference to figures 9, 10). Of course the modalities for the positioning of the sheet L do not change, save for the fact that the square type member might not be positioned in correspondence of the intersection I. As a further possibility, the square type member may be replaced by a clamp engagement member configured to clamp the sheet L by acting on both faces. All the considerations expressed above in relation to the square type member of course apply.

In yet an alternative embodiment, the suction cup 14 may be used as an engagement member of the glass sheet alternatively to the suction cup 12a. The considerations expressed previously in relation to the use of the square type member remain valid, in so far as the suction cup 14 occupies the same position.

In yet a further embodiment, the monitoring step of the current position of the glass sheet displaced by the operator may be performed by means of the same electronic system for detection of the position of the sheet L. In such case, there is no necessity to couple an encoder to the suction cup 12a (or to any other engagement member that is used), but a real time detection of the position (the initial position and all the other subsequent position) by the system in point is used that is chosen for example between a camera system, or a laser light optoelectronic system. All the other considerations previously set forth in respect of the performance of the method remain valid. Of course, the calculation of the desired position as a function of the features of the cutting line, or more in general of the work to be carried out, will entirely be handed over to the system for detection of the position itself.

It should be borne in mind that what described so far relative to the method according to the invention can be applied also to other types of machines, different from a glass sheet cutting machine (float or laminated), and in the field of the glass sheet cutting machine it may ultimately replace also the 90° rotation automatically performed with the modalities described above.

In case of machines different from a glass cutting machine, for example a machine to perform peripheral working of edges of the sheet (for example the chamfering of edges) the implementation of a method according to the invention allows to operate with the machine having a working head movable along an axis only (for example the axis Y), but capable of machining on whatever edge, also non orthogonal to the other edges of the sheet or to the immediately adjacent edges) simply thanks to the fact that the glass sheet L is positioned so as to align the edge to be machined to the direction of movement of the working head.

In such case the desired position will no longer correspond to an alignment condition of two cutting lines, but will correspond to a parallelism condition of the edge to be machined with the axis along which the working head moves. More precisely, in case of a machine with a grinding wheel to perform chamfering operations, and when the axis on which the working head moves is co-planar with the axis of rotation of the wheel, the desired position corresponds to a condition wherein the edge to be machined is parallel to the working axis of the machine and is offset therefrom by a distance equal to the difference between the radius of the wheel and the working depth (or a distance representative of the latter).

The benefit deriving by the adoption of the method according to the invention resides in the fact of being able to work whatever glass sheet with a machine whose working head is substantially a single-axis one.

Generally speaking, the implementation of the positioning method of the sheet according to the invention allows to dispense with the arrangement of complex handling systems for the sheet, entrusting the operation to the manual action of the operator, which is anyway electronically assisted to guarantee the maximum precision. The manual displacement of the glass sheet with electronic assistance is much more effective than the completely automated displacement, in so far as the latter type of displacement in many cases requires to divide the rotation in two or more steps, specially with transverses having large dimensions, with subsequent complication both of the control system and the handling system.

Furthermore, with a traditional marking system of the endpoints of the cutting line it is required to have available additional personnel to effect the marking on transverses (or on primitive sheets) which are very big: such inconvenient is completely eliminated thanks to the method according to the invention.

In general, the method according to the invention - whatever the machine and/or the operation for which it is implemented - is appreciably faster than any automated rotation method of the known type, and allows i.a. to immediately make the finished product, without having to queue the machining to other, less demanding, operations for reasons of time requested by the machining itself.

Of course, the constructional details and the embodiments may be widely varied with respect to what has been described and illustrated herein without by this departing from the scope of the present invention, as defined by the appended claims.

## Claims

1. A method for the positioning of a glass sheet on a working plane of a glass sheet working machine (1), the method including the steps of:
- detection of the position of said glass sheet with respect to said working plane by means of a position detecting electronic system,
- provision of a human-machine interface adapted to provide information relative to the position of the glass sheet,
- manual displacement of said glass sheet by an operator along said working plane to bring it in a desired position, said manual displacement being assisted via a monitoring of the current position of the glass sheet by means of a position monitoring electronic system, and
- signalling to the operator a condition of achievement of the desired position by means of said human-machine interface,
wherein said glass sheet working machine includes an engagement member (12a) of said glass sheet (L) rotatably mounted around an axis of rotation (A) orthogonal to said working plane (2),
wherein, preliminarily to said manual displacement step, the glass sheet (L) is engaged by means of said engagement member (12a) so that said manual displacement step includes a rotation of said glass sheet (L) around said axis of rotation (A).

2. The method according to Claim 1, wherein said monitoring of the current position of the glass sheet (L) displaced by the operator further includes comparing the monitored position with the desired position of the glass sheet (L).

3. The method according to Claim 1 or Claim 2, wherein said human-machine interface comprises a display on which the desired position and a current position of the glass sheet (L) displaced by the operator are displayed.

4. The method according to Claim 3, wherein said human-machine interface includes an acoustic signalling device configured for reporting a condition of proximity of the glass sheet with respect to the desired position.

5. The method according to Claim 4, wherein said step of signalling to the operator a condition of achievement of the desired position includes operating said acoustic signalling device to emit:
- an intermittent sound signal having a frequency progressively increasing upon approaching of the glass sheet to the desired position, and
- a continuous sound signal upon reaching the desired position of the glass sheet (L).

6. The method according to Claim 1, wherein said engagement member includes, alternatively:
- a suction-cup mounted freely rotatable around said axis of rotation (A),
- a bracket member mounted freely rotatable around said axis of rotation, and
- a clamp member mounted freely rotatable around said axis of rotation.

7. The method according to Claim 1 or Claim 6, wherein said engagement member is connected in rotation with an angular position transducer by which said step of monitoring the current position of the glass sheet (L) displaced by the operator is performed.

8. The method according to Claim 1 or 6, wherein the monitoring of the current position of the glass sheet (L) displaced by the operator is performed by means of said position detecting electronic system.

9. The method according to any of Claims 1 and 6 to 8, wherein said glass sheet working machine is a glass sheet cutting machine (1), and wherein said desired position of the glass sheet (L) corresponds to a position such that an alignment between a cutting line of the machine (1) and a desired cutting line on the glass sheet (L) occurs.

10. The method according to Claim 9, wherein furthermore, preliminarily to the manual displacement step, the method includes the following steps:
- preliminary positioning of the glass sheet (L) so that a first vertical plane containing the desired cutting line (S) defines an intersection with a second vertical plane containing the cutting line (T) of the machine (1),
- displacement of said engagement member (12a) to a position such that the axis of rotation (A) of said engagement member (12a) coincides with the intersection of said first and second vertical planes, and
- engagement of the glass sheet (L) by means of said engagement member (12a).

11. The method according to Claim 10, wherein said glass sheet working machine is a laminated glass sheet cutting machine (1) including:
- said working plane (2), whereon the glass sheet (L) is fed in a longitudinal advancement direction (X) towards the cutting line of the machine (1),
- a transversal cutting bridge (6) arranged above said working plane and defining the cutting line (T) of the machine (1),
- a transverse measurement bridge (3) which is movable longitudinally with respect to said working plane (2) and has one or more abutment members (16) adapted to cooperate with a leading edge of the glass sheet (L), wherein said engagement member (12a) is movable in a parallel direction to the cutting line (T) of the machine (1),
wherein said preliminary positioning step of the glass sheet (L) is performed in an automated manner by using said measurement bridge (3) for the longitudinal displacement of the glass sheet (L) in a direction which is opposite to said longitudinal advancement direction (X).

## Patentansprüche

1. Verfahren zum Positionieren einer Glasplatte auf einer Arbeitsebene einer Glasplattenbearbeitungsmaschine (1), wobei das Verfahren die folgenden Schritte beinhaltet:
- Erfassung der Position der Glasplatte in Bezug zu der Arbeitsebene mittels eines elektronischen Positionserfassungssystems,
- Bereitstellung einer Mensch-Maschine-Schnittstelle, die geeignet ist, die Position der Glasplatte betreffende Informationen bereitzustellen,
- manuelle Verlagerung der Glasplatte entlang der Arbeitsebene durch einen Bediener, um diese in eine gewünschte Position zu bringen, wobei die manuelle Verlagerung durch Überwachung der aktuellen Position der Glasplatte mittels eines elektronischen Positionsüberwachungssystems unterstützt wird, und
- Signalisieren eines Zustands eines Erreichens der gewünschten Position an den Bediener mittels der Mensch-Maschine-Schnittstelle,
wobei die Glasplattenbearbeitungsmaschine ein Eingriffelement (12a) der Glasplatte (L) beinhaltet, das um eine orthogonal zu der Arbeitsebene (2) liegende Drehachse (A) drehbar gelagert ist,
wobei vor dem Schritt der manuellen Verlagerung die Glasplatte (L) mittels des Eingriffelements (12a) gegriffen wird, so dass der Schritt der manuellen Verlagerung eine Drehung der Glasplatte (L) um die Drehachse (A) beinhaltet.

2. Verfahren nach Anspruch 1, wobei das Überwachen der aktuellen Position der durch den Bediener verlagerten Glasplatte (L) ferner ein Vergleichen der überwachten Position mit der gewünschten Position der Glasplatte (L) beinhaltet.

3. Verfahren nach Anspruch 1 oder Anspruch 2, wobei die Mensch-Maschine-Schnittstelle eine Anzeige umfasst, auf der die gewünschte Position und eine aktuelle Position der durch den Bediener verlagerten Glasplatte (L) angezeigt werden.

4. Verfahren nach Anspruch 3, wobei die Mensch-Maschine-Schnittstelle eine akustische Signaleinrichtung beinhaltet, die zum Melden eines Zustands einer Nähe der Glasplatte in Bezug auf die gewünschte Position ausgelegt ist.

5. Verfahren nach Anspruch 4, wobei der Schritt des Signalisierens eines Zustands eines Erreichens der gewünschten Position an den Bediener ein Betreiben der akustischen Signaleinrichtung beinhaltet, um Folgendes auszugeben:
- ein intermittierendes Tonsignal mit einer bei Annäherung der Glasplatte an die gewünschte Position progressiv ansteigenden Frequenz und
- ein kontinuierliches Tonsignal bei Erreichen der gewünschten Position der Glasplatte (L).

6. Verfahren nach Anspruch 1, wobei das Eingriffelement alternativ Folgendes beinhaltet:
- einen um die Drehachse (A) frei drehbar gelagerten Saugteller,
- ein um die Drehachse frei drehbar gelagertes Halteelement und
- ein um die Drehachse frei drehbar gelagertes Klemmelement.

7. Verfahren nach Anspruch 1 oder Anspruch 6, wobei das Eingriffelement mit einem Winkelpositionsgeber drehgekoppelt ist, durch den der Schritt des Überwachens der aktuellen Position der durch den Bediener verlagerten Glasplatte (L) erfolgt.

8. Verfahren nach Anspruch 1 oder 6, wobei das Überwachen der aktuellen Position der durch den Bediener verlagerten Glasplatte (L) mittels des elektronischen Positionserfassungssystems erfolgt.

9. Verfahren nach einem der Ansprüche 1 und 6 bis 8, wobei es sich bei der Glasplattenbearbeitungsmaschine um eine Glasplattenschneidemaschine (1) handelt und wobei die gewünschte Position der Glasplatte (L) einer Position derart entspricht, dass eine Ausrichtung einer Schnittlinie der Maschine (1) mit einer gewünschten Schnittlinie auf der Glasplatte (L) eintritt.

10. Verfahren nach Anspruch 9, wobei das Verfahren vor dem Schritt der manuellen Verlagerung ferner die folgenden Schritte umfasst:
- Vorpositionieren der Glasplatte (L) so, dass eine die gewünschte Schnittlinie (S) enthaltende erste vertikale Ebene eine Überschneidung mit einer die Schnittlinie (T) der Maschine (1) enthaltenden zweiten vertikalen Ebene definiert,
- Verlagerung des Eingriffelements (12a) in eine Position derart, dass die Drehachse (A) des Eingriffelements (12a) mit der Überschneidung der ersten und zweiten vertikalen Ebene zusammenfällt, und
- Greifen der Glasplatte (L) mittels des Eingriffelements (12a).

11. Verfahren nach Anspruch 10, wobei es sich bei der Glasplattenbearbeitungsmaschine um eine Schneidemaschine (1) für Schichtglasplatten handelt, die Folgendes beinhaltet:
- die Arbeitsebene (2), auf welcher die Glasplatte (L) in einer Längsbewegungsrichtung (X) in Richtung der Schnittlinie der Maschine (1) zugeführt wird,
- eine Querschneidebrücke (6), die oberhalb der Arbeitsebene angeordnet ist und die Schnittlinie (T) der Maschine (1) definiert,
- eine Quermessbrücke (3), die in Bezug auf die Arbeitsebene (2) in Längsrichtung bewegbar ist und ein oder mehrere Anschlagelemente (16) aufweist, die geeignet sind, mit einer Vorderkante der Glasplatte (L) zusammenzuwirken,
wobei das Eingriffelement (12a) in einer parallel zu der Schnittlinie (T) der Maschine (1) verlaufenden Richtung bewegbar ist,
wobei der Schritt des Vorpositionierens der Glasplatte (L) unter Verwendung der Messbrücke (3) zur Längsverlagerung der Glasplatte (L) in einer der Längsbewegungsrichtung (X) entgegengesetzten Richtung automatisch erfolgt.

## Revendications

1. Procédé de positionnement d'une feuille de verre sur un plan de travail d'une machine (1) à travailler une feuille de verre, le procédé comportant les étapes:
- détecter la position de ladite feuille de verre par rapport audit plan de travail au moyen d'un système électronique de détection de position,
- fournir une interface homme-machine adaptée pour fournir des informations relatives à la position de la feuille de verre,
- déplacer manuellement ladite feuille de verre par un opérateur le long dudit plan de travail pour l'amener dans une position souhaitée, ledit déplacement manuel étant assisté par une surveillance de la position actuelle de la feuille de verre au moyen d'un système électronique de surveillance de position, et
- signaler à l'opérateur une condition **d'atteinte** de la position souhaitée au moyen de ladite interface homme-machine,
dans lequel ladite machine à travailler une feuille de verre comporte un élément d'engagement (12a) de ladite feuille de verre (L) monté en rotation autour d'un axe de rotation (A) orthogonal audit plan de travail (2),
dans lequel, préalablement à ladite étape de déplacement manuel, la feuille de verre (L) est engagée au moyen dudit élément d'engagement (12a) de sorte que ladite étape de déplacement manuel comporte une rotation de ladite feuille de verre (L) autour dudit axe de rotation (A).

2. Procédé selon la revendication 1, dans lequel ladite surveillance de la position actuelle de la feuille de verre (L) déplacée par l'opérateur comporte en outre la comparaison de la position surveillée à la position souhaitée de la feuille de verre (L).

3. Procédé selon la revendication 1 ou 2, dans lequel ladite interface homme-machine comprend un écran sur lequel la position souhaitée et une position actuelle de la feuille de verre (L) déplacée par l'opérateur sont affichées.

4. Procédé selon la revendication 3, dans lequel ladite interface homme-machine comporte un dispositif de signalisation acoustique configuré pour rapporter une condition de proximité de la feuille de verre par rapport à la position souhaitée.

5. Procédé selon la revendication 4, dans lequel ladite étape de signalisation à l'opérateur d'une condition **d'atteinte** de la position souhaitée comporte le fonctionnement dudit dispositif de signalisation acoustique pour émettre :
- un signal sonore intermittent ayant une fréquence qui augmente progressivement **lorsque la feuille de verre s'approche de** la position souhaitée, et
- un signal sonore continu **lorsqu'on atteint** la position souhaitée de la feuille de verre (L).

6. Procédé selon la revendication 1, dans lequel ledit élément **d'engagement** comporte, alternativement :
- une ventouse montée de manière à pouvoir tourner librement autour dudit axe de rotation (A),
- un élément de support monté de manière à pouvoir tourner librement autour dudit axe de rotation, et
- un élément de serrage monté de manière à pouvoir tourner librement autour dudit axe de rotation.

7. Procédé selon la revendication 1 ou 6, dans lequel ledit élément **d'engagement est** relié en rotation à un capteur de position angulaire par lequel ladite étape de surveillance de la position actuelle de la feuille de verre (L) déplacée par l'opérateur est réalisée.

8. Procédé selon la revendication 1 ou 6, dans lequel la surveillance de la position actuelle de la feuille de verre (L) déplacée par l'opérateur est réalisée au moyen dudit système électronique de détection de position.

9. Procédé selon l'une des revendications 1 et 6 à 8, dans lequel ladite machine à travailler une feuille de verre est une machine de coupe de feuille de verre (1), et dans lequel ladite position souhaitée de la feuille de verre (L) correspond à une position telle qu'un alignement entre une ligne de coupe de la machine (1) et une ligne de coupe souhaitée sur la feuille de verre (L) se produit.

10. Procédé selon la revendication 9, dans lequel, en outre, préalablement à l'étape de déplacement manuel, le procédé comporte les étapes suivantes :
- le positionnement préliminaire de la feuille de verre (L) de sorte qu'un premier plan vertical contenant la ligne de coupe souhaitée (S) définisse une intersection avec un deuxième plan vertical contenant la ligne de coupe (T) de la machine (1),
- le déplacement dudit élément **d'engagement** (12a) vers une position telle que l'axe de rotation (A) dudit élément **d'engagement** (12a) coïncide avec l'intersection desdits premier et deuxième plans verticaux, et
- **l'engagement** de la feuille de verre (L) au moyen dudit élément **d'engagement (12a).**

11. Procédé selon la revendication 10, dans lequel ladite machine à travailler une feuille de verre est une machine de coupe de feuille de verre feuilleté (1) comportant :
- ledit plan de travail (2), sur lequel la feuille de verre (L) est acheminée dans une direction d'avancement longitudinale (X) vers la ligne de coupe de la machine (1),
- un pont de coupe transversal (6) agencé au-dessus dudit plan de travail et définissant la ligne de coupe (T) de la machine (1),
- un pont de mesure transversal (3) qui est mobile longitudinalement par rapport audit plan de travail (2) et a un ou plusieurs élément(s) de butée (16) adapté(s) pour coopérer avec un bord d'attaque de la feuille de verre (L),
où ledit élément **d'engagement** (12a) est mobile dans une direction parallèle à la ligne de coupe (T) de la machine (1),
où ladite étape de positionnement préliminaire de la feuille de verre (L) est réalisée de manière automatisée en utilisant ledit pont de mesure (3) pour le déplacement longitudinal de la feuille de verre (L) dans une direction opposée à ladite direction d'avancement longitudinale (X).
